# EUROPEAN PATENT SPECIFICATION

(11) **EP 3 076 462 B1**
(45) Date of publication and mention of the grant of the patent: **03.01.2018**
(21) Application number: 14865017.9
(22) Date of filing: 14.11.2014
(51) Int. Cl.: H01M 4/62, C08F 214/22, C08K 3/18, H01M 4/13, C09D 127/16

(54) **AQUEOUS VINYLIDENE FLUORIDE-BASED POLYMER COMPOSITION AND USE THEREOF**
WÄSSRIGE, AUF VINYLIDENFLUORID BASIERENDE POLYMERZUSAMMENSETZUNG UND VERWENDUNG DAVON
COMPOSITION AQUEUSE DE POLYMÈRE À BASE DE FLUORURE DE VINYLIDÈNE ET SON UTILISATION

(30) Priority: 27.11.2013 JP 2013244866
(43) Date of publication of application: 05.10.2016
(73) Proprietor: Kureha Corporation, Chuo-ku Tokyo 103-8552 (JP)
(72) Inventor: NAGASAWA, Yoshiyuki, Tokyo 103-8552 (JP); IGARASHI, Tamito, Tokyo 103-8552 (JP)
(74) Representative: BRP Renaud & Partner mbB Rechtsanwälte Patentanwälte Steuerberater
(86) International application number: PCT/JP2014/080231
(87) International publication number: WO 2015/079936

(56) References cited:
- WO-A1-2006/043609
- WO-A1-2011/043246
- WO-A1-2013/008564
- WO-A1-2013/010936
- WO-A1-2013/027771
- JP-A- 2007 005 148
- JP-A- 2012 149 152
- JP-A- 2012 201 866
- JP-A- 2013 030 449
- JP-A- 2013 033 702
- JP-A- 2013 114 848

## Description

### TECHNICAL FIELD

The present invention relates to an aqueous vinylidene fluoride-based polymer composition and use thereof.

### BACKGROUND ART

In recent years, there have been remarkable developments in electronic technology, and the functionality of miniature mobile devices has become increasingly advanced. There is a demand for the power supplies used in these devices to be smaller and lighter (higher energy density). Non-aqueous electrolyte secondary batteries such as lithium-ion secondary batteries are widely used as batteries having high energy density.

From the perspective of global environmental problems or energy conservation, non-aqueous electrolyte secondary batteries are used in hybrid automobiles combining a secondary battery and an engine, electric automobiles having a secondary battery as a power supply, and the like, and applications thereof are expanding.

Conventionally, a vinylidene fluoride-based polymer such as polyvinylidene fluoride (PVDF) is primarily used as a binder resin (binding agent) for the electrodes of a non-aqueous electrolyte secondary battery. In the production of electrodes, a binder solution prepared by dissolving the binder resin in a solvent such as N-methyl-2-pyrrolidone (NMP) is used.

However, the solvent such as NMP used in the binder solution has a large environmental burden, and there is a recovery cost associated with the solvent, so there is a demand for a vinylidene fluoride-based polymer that can be used in the state of an aqueous dispersion.

For example, it has been proposed to use a dispersion prepared by dispersing a binding agent such as a fluorine resin in an aqueous solution containing a thickener in the production of an anode mixture for a non-aqueous electrolyte secondary battery (for example, see Patent Document 1).

In addition, there are known aqueous compositions containing water and fluorine-based polymer particles having a weight average particle size of less than 500 nm (for example, see Patent Document 2).
However, even when electrodes for a non-aqueous electrolyte secondary battery are produced using these compositions, the adhesiveness between the current collector and the mixture layer is poor, and there is still a need for improvement.

### CITATION LIST

### Patent Literature

Patent Literature 1: Japanese Unexamined Patent Application Publication No. H08-195201A
Patent Literature 2: WO/2010/138647

### SUMMARY OF INVENTION

### Technical Problem

The present invention was conceived in light of the problems of the conventional technology described above and relates to providing an aqueous vinylidene fluoride-based polymer composition and a binder solution capable of providing a mixture for a non-aqueous electrolyte secondary battery having excellent binding strength with a current collector.

### Solution to Problem

As a result of diligent research to achieve the object described above, the present inventors discovered that an aqueous vinylidene fluoride-based polymer composition comprising a specific vinylidene fluoride-based polymer and water can solve the above problems, and the present inventors thereby completed the present invention.

Specifically, the aqueous vinylidene fluoride-based polymer composition of the present invention is an aqueous vinylidene fluoride-based polymer composition comprising a vinylidene fluoride-based polymer and water; the vinylidene fluoride-based polymer exhibiting a multi-modal scattering intensity distribution in dynamic light scattering in a measurement range of from 1.0 to 999,999.9 nm; the vinylidene fluoride-based polymer comprising a component having a particle size of not greater than 1 µm in a scattering intensity distribution (component A) and a component having a particle size exceeding 1 µm (component B); an average particle size (D50) of component A being from 0.02 to 0.5 µm; an average particle size (D50) of component B being from 1.1 to 50 µm; and an integrated value of a scattering intensity distribution frequency (f%) in a particle size range of from 1.0 to 1000.0 nm being in a range of from 70.0 to 98.7%.

The integrated value of the scattering intensity distribution frequency (f%) in a particle size range of from 1.0 to 1000.0 nm is preferably in a range of from 80.0 to 98.6%.
The binder solution of the present invention contains the aqueous vinylidene fluoride-based polymer composition and a thickener.

The mixture for a non-aqueous electrolyte secondary battery of the present invention contains the aqueous vinylidene fluoride-based polymer composition, a thickener, and an active material.
An electrode for a non-aqueous electrolyte secondary battery of the present invention is obtained by applying the mixture for a non-aqueous electrolyte secondary battery to a current collector and drying the mixture.
The non-aqueous electrolyte secondary battery of the present invention has the aforementioned electrodes for a non-aqueous electrolyte secondary battery.

### Advantageous Effects of Invention

With the present invention, it is possible to obtain electrodes for a non-aqueous electrolyte secondary battery having excellent adhesive strength between a current collector and a mixture layer, and using the electrodes makes it possible to enhance the reliability of the non-aqueous electrolyte secondary battery.

### Brief Description of Drawings

FIG. 1 illustrates the measurement results of the scattering intensity distribution of an aqueous VDF-HFP copolymer composition (1) obtained in Working Example 1.
FIG. 2 illustrates the measurement results of the scattering intensity distribution of an aqueous VDF-HFP copolymer composition (2) obtained in Working Example 2.
FIG. 3 illustrates the measurement results of the scattering intensity distribution of an aqueous VDF-HFP copolymer composition (c1) obtained in Comparative Example 1.
FIG. 4 illustrates the measurement results of the scattering intensity distribution of an aqueous VDF-HFP copolymer composition (c2) obtained in Comparative Example 2.
FIG. 5 illustrates the measurement results of the scattering intensity distribution of an aqueous VDF-HFP copolymer composition (c3) obtained in Comparative Example 3.
FIG. 6 illustrates the measurement results of the scattering intensity distribution of an aqueous VDF-HFP copolymer composition (c4) obtained in Comparative Example 4.

### Description of Embodiments

The present invention will be specifically described below.
The aqueous vinylidene fluoride-based polymer composition of the present invention is an aqueous vinylidene fluoride-based polymer composition comprising a vinylidene fluoride-based polymer and water; the vinylidene fluoride-based polymer exhibiting a multi-modal scattering intensity distribution in dynamic light scattering in a measurement range of from 1.0 to 999,999.9 nm; the vinylidene fluoride-based polymer comprising a component having a particle size of not greater than 1 µm in a scattering intensity distribution (component A) and a component having a particle size exceeding 1 µm (component B); an average particle size (D50) of component A being from 0.02 to 0.5 µm; an average particle size (D50) of component B being from 1.1 to 50 µm; and an integrated value of a scattering intensity distribution frequency (f%) in a particle size range of from 1.0 to 1000.0 nm being in a range of from 70.0 to 98.7%.

### Vinylidene fluoride-based polymer

The aqueous vinylidene fluoride-based polymer composition of the present invention exhibits a multi-modal scattering intensity distribution in dynamic light scattering in a measurement range of from 1.0 to 999,999.9 nm; the vinylidene fluoride-based polymer comprising a component having a particle size of not greater than 1 µm in a scattering intensity distribution (component A) and a component having a particle size exceeding 1 µm (component B); an average particle size (D50) of component A being from 0.02 to 0.5 µm; an average particle size (D50) of component B being from 1.1 to 50 µm; and an integrated value of a scattering intensity distribution frequency (f%) in a particle size range of from 1.0 to 1000.0 nm being in a range of from 70.0 to 98.7%.

That is, the vinylidene fluoride-based polymer used in the present invention comprises a vinylidene fluoride-based polymer having different particle sizes and has a component with a small particle size (not greater than 1 µm) and a component with a large particle size (exceeding 1 µm).

The vinylidene fluoride-based polymer may be a vinylidene fluoride homopolymer or a vinylidene fluoride copolymer. In the aqueous vinylidene fluoride-based polymer composition of the present invention, the vinylidene fluoride-based polymer is present in the form of particles, but the particles may be formed from one type of vinylidene fluoride-based polymer or may be formed from a mixture of vinylidene fluoride-based polymers. A plurality of types of particles with different vinylidene fluoride-based polymer constituting the particles may also be used as the particles.

When the vinylidene fluoride-based polymer is a vinylidene fluoride-based copolymer, the monomers other than vinylidene fluoride constituting the copolymer (also described as "other monomers" hereafter) are not particularly limited, but examples thereof include fluorine-based monomers which are copolymerizable with vinylidene fluoride, hydrocarbon-based monomers such as ethylene or propylene, carboxyl group-containing monomers, and carboxylic anhydride group-containing monomers. One type of other monomers may be used alone, or two or more types may be used. The vinylidene fluoride-based polymer may also be crosslinked.

When the vinylidene fluoride-based polymer is a vinylidene fluoride-based copolymer and it is assumed that the total amount of all monomers used as raw materials is 100 mol%, vinylidene fluoride is ordinarily used in an amount of not less than 50 mol%, preferably not less than 80 mol%, more preferably not less than 85 mol%, and most preferably not less than 90 mol%. In addition, the other monomers are ordinarily used in an amount of not greater than 50 mol%, preferably not greater than 20 mol%, more preferably not greater than 15 mol%, and most preferably not greater than 10 mol%. When the vinylidene fluoride-based polymer is a vinylidene fluoride-based copolymer, it is preferable for the traits originating from the other monomers to be expressed, and it is preferable to use vinylidene fluoride in an amount of not greater than 99.9 mol% and the other monomers in an amount of not less than 0.1 mol%.

Examples of fluorine-based monomers that are copolymerizable with vinylidene fluoride include vinyl fluoride, trifluoroethylene (TrFE), tetrafluoroethylene (TFE), chlorotrifluoroethylene (CTFE), hexafluoropropylene (HFP) and perfluoroalkyl vinyl ethers represented by perfluoromethyl vinyl ether.

Preferable examples of carboxyl group-containing monomers include unsaturated monobasic acids, unsaturated dibasic acids, and monoesters of unsaturated dibasic acids. Examples of unsaturated monobasic acids include acrylic acids, methacrylic acids, 2-carboxyethylacrylate, and 2-carboxyethylmethacrylate. Examples of unsaturated dibasic acids include maleic acid and citraconic acid. Substances having from 5 to 8 carbon atoms are preferable as monoesters of unsaturated dibasic acids, and examples thereof include monomethyl maleate esters, monoethyl maleate esters, monomethyl citraconate esters, and monoethyl citraconate esters. Of these, acrylic acids, methacrylic acids, maleic acid, citraconic acid, monomethyl maleate esters, and monomethyl citraconate esters are preferable as carboxyl group-containing monomers. In addition, acryloyloxyethyl succinate, methacryloyloxyethyl succinate, acryloyloxyethyl phthalate, methacryloyloxyethyl phthalate, and the like may also be used as carboxyl group-containing monomers.

Examples of carboxylic anhydride group-containing monomers include acid anhydrides of the unsaturated dibasic acids described above, specific examples of which include maleic anhydride and citraconic anhydride.
A crosslinked polymer may also be used as the vinylidene fluoride-based polymer used in the present invention. When a crosslinked polymer is used as the vinylidene fluoride-based polymer, a polyfunctional monomer may be used as another monomer, and a crosslinking reaction may be performed using a polyfunctional monomer after an uncrosslinked polymer is obtained.

A copolymer of vinylidene fluoride and a fluorine-based monomer which is copolymerizable with vinylidene fluoride is preferable as a vinylidene fluoride (VDF) copolymer. Specifically, VDF-TFE copolymers, VDF-TFE-HFP copolymers, VDF-HFP copolymers, VDF-CTFE copolymers, VDF-TFE-CTFE copolymers, and VDF-HFP-CTFE copolymers are preferable, and VDF-TFE-HFP copolymers, VDF-HFP copolymers, VDF-CTFE copolymers, and VDF-HFP-CTFE copolymers are more preferable.

As described above, the vinylidene fluoride-based polymer may be a vinylidene fluoride homopolymer or a vinylidene fluoride copolymer, but it is preferable to use vinylidene fluoride copolymers, which tend to have better adhesive strength between the current collector and the mixture layer when electrodes for a non-aqueous electrolyte secondary battery are produced.

As described above, the vinylidene fluoride-based polymer used in the present invention exhibits a multi-modal scattering intensity distribution in dynamic light scattering in a measurement range of from 1.0 to 999,999.9 nm; the vinylidene fluoride-based polymer comprising a component having a particle size of not greater than 1 µm in a scattering intensity distribution (component A) and a component having a particle size exceeding 1 µm (component B); an average particle size (D50) of component A being from 0.02 to 0.5 µm; an average particle size (D50) of component B being from 1.1 to 50 µm; and an integrated value of a scattering intensity distribution frequency (f%) in a particle size range of from 1.0 to 1000.0 nm being in a range of from 70.0 to 98.7%. The method of satisfying the requirements described above is not particularly limited, but this can ordinarily be achieved by using two or more types of vinylidene fluoride-based polymers with different particle sizes, and this can also be achieved by using one or more types of a vinylidene fluoride-based polymer aqueous solution having a large polydispersity (poor homogeneity of particle size and particle shape).

Specifically, a vinylidene fluoride-based polymer having a small particle size corresponding to component A and a vinylidene fluoride-based polymer having a large particle size corresponding to component B, for example, may be prepared and used in combination to form a vinylidene fluoride-based polymer which satisfies the requirements described above.

The production method for the vinylidene fluoride-based polymer corresponding to component A is not particularly limited, but emulsion polymerization, soap-free emulsion polymerization and mini-emulsion polymerization are preferable.
Emulsion polymerization is a method of obtaining a vinylidene fluoride-based polymer using a monomer, an emulsifier, water, and a polymerization initiator. The emulsifier may be a substance which can form micelles and can stably disperse the vinylidene fluoride-based polymer that is produced, and an ionic emulsifier, a non-ionic emulsifier, or the like may be used. A water-soluble peroxide or a water-soluble azo compound may be used as the polymerization initiator, and a redox initiator such as ascorbic acid-hydrogen peroxide may also be used.

Soap-free emulsion polymerization is a form of emulsion polymerization performed without using an ordinary emulsifier that is used when performing the emulsion polymerization described above. A vinylidene fluoride-based polymer obtained by soap-free emulsion polymerization is preferable in that the emulsifier does not bleed out to the surface since the emulsifier does not remain in the polymer particles. Soap-free emulsion polymerization may be performed by replacing the emulsifier used in emulsion polymerization described above with a reactive emulsifier. In addition, when the monomers are dispersed, soap-free polymerization may also be performed without using a reactive emulsifier.

A reactive emulsifier is a substance which has a polymerizable double bond in the molecule and acts as an emulsifier. When a reactive emulsifier is used, micelles are formed in the same manner as when the aforementioned emulsifier is present in the system in the initial stages of polymerization, but as the reaction progresses, the reactive emulsifier is consumed as a monomer, and the reactive emulsifier is ultimately almost completely absent in the free state in the reaction system. Examples of reactive emulsifiers include, but are not limited to, polyoxyalkylene alkenyl ethers, sodium alkylallylsulfosuccinate, sodium methacryloyloxy polyoxypropylene sulfonate esters, and alkoxy polyethylene glycol methacrylates.

Mini-emulsion polymerization is a method of performing polymerization by refining monomer droplets to a sub-micron size by applying a strong shearing force using an ultrasonic wave oscillator or the like. Mini-emulsion polymerization is performed by adding a hardly-soluble substance called a hydrohove in order to stabilize the refined monomer oil droplets. In mini-emulsion polymerization, monomer oil droplets are ideally polymerized, and each oil droplet transforms into a fine particle of the vinylidene fluoride-based polymer.

A vinylidene fluoride-based polymer obtained by the method described above may be used as component A. Specifically, a latex containing a vinylidene fluoride-based polymer obtained by emulsion polymerization, for example, may be used directly as component A (vinylidene fluoride-based polymer) and water, and an aqueous dispersion obtained by using a surfactant to once again disperse aggregated particles obtained by breaking down the latex may also be used as component A (vinylidene fluoride-based polymer) and water.

The production method for the vinylidene fluoride-based polymer corresponding to component B is not particularly limited, but the polymer may be produced, for example, by suspension polymerization, or a vinylidene fluoride-based polymer corresponding to component A may be produced with a method such as emulsion polymerization, and aggregated particles obtained by breaking down a latex of the vinylidene fluoride-based polymer corresponding to component A may be used as component B.

Suspension polymerization is a method of dissolving an oil-soluble polymerization initiator in a water-insoluble monomer in water containing a stabilizer, suspending and dispersing the mixture in water by mechanical stirring, and heating the mixture so as to perform polymerization in the monomer droplets. In suspension polymerization, polymerization progresses in the monomer droplets so that a dispersed solution of fine particles of a vinylidene fluoride-based polymer is obtained.

As a method of breaking down the latex of the vinylidene fluoride-based polymer corresponding to component A, the stability of the latex may be diminished by methods such as salt extraction/aggregation, acid extraction/aggregation, freeze-thawing, and aggregated particles may also be obtained directly in water. Furthermore, the particles may also be used after being dried and prepared as a powder. The latex may also be used directly or after being prepared as a powder by freeze drying or spray drying. Treatment may also be performed to remove the emulsifier or auxiliary agents before or after these aggregation operations.

Taking into consideration the fact that the substance will remain inside the battery, a substance having good oxidation reduction resistance is preferable as an emulsifier (also called a "surfactant" hereafter) or dispersant used at the time of the production of the vinylidene fluoride-based polymer corresponding to component A or component B or when once again dispersing the vinylidene fluoride-based polymer in water after recovering the vinylidene fluoride-based polymer in the form of particles.

The surfactant may be a non-ionic surfactant, a cationic surfactant, an anionic surfactant, or an amphoteric surfactant, and a plurality of types may also be used. The surfactant used in polymerization is preferably a surfactant that is used conventionally in the polymerization of vinylidene polyfluoride, such as perfluorinated, partially fluorinated, and non-fluorinated surfactants. Of these, it is preferable to use perfluoroalkylsulfonic acid and salts thereof, perfluoroalkylcarboxylic acids and salts thereof, or fluorine-based surfactants having fluorocarbon chains or fluoropolyether chains, and it is more preferable to use perfluoroalkylcarboxylic acids and salts thereof.

The vinylidene fluoride-based polymer used in the present invention comprises component A and component B described above. Since the vinylidene fluoride-based polymer used in the present invention comprises a plurality of components having different particle sizes, the scattering intensity distribution determined by dynamic light scattering in a measurement range of from 1.0 to 999,999.9 nm is multi-modal. In the vinylidene fluoride-based polymer used in the present invention, a component having a particle size of not greater than 1 µm in the scattering intensity distribution is component A, and a component having a particle size exceeding 1 µm is component B.

The average particle size (D50) of component A determined by the scattering intensity distribution according to dynamic light scattering is from 0.02 to 0.5 µm, preferably from 0.05 to 0.4 µm, and more preferably from 0.07 to 0.3 µm.

The average particle size (D50) of component B determined by the scattering intensity distribution according to dynamic light scattering is from 1.1 to 50 µm, preferably from 1.1 to 40 µm, and more preferably from 1.1 to 30 µm.

In addition, in the vinylidene fluoride-based polymer, the ratio of component A to component B, in terms of the integrated value of the scattering intensity distribution frequency (f%) in a particle size range of from 1.0 to 1000.0 nm in the scattering intensity distribution determined by dynamic light scattering in a measurement range of from 1.0 to 999,999.9 nm, is in a range of from 70.0 to 98.7%, preferably in a range of from 80.0 to 98.6%, and more preferably in a range of from 85.0 to 98.5%.

Note that, for the integrated value of the scattering intensity distribution frequency (f%) in a particle size range of from 1.0 to 1000.0 nm to be in a range of from 70.0 to 98.7%, this means, in other words, that the integrated value of the scattering intensity distribution frequency (f%) in a particle size range exceeding 1000.0 nm up to 999,999 nm is in a range of from 1.3 to 30.0%. This means that particles in a particle size range of from 1.0 to 1000.0 nm are present in a greater amount than particles in a particle size range exceeding 1000.0 nm up to 999,999 nm. The scattering intensity distribution in this case is the particle size distribution weighted with the light scattering intensity for each specific particle size group, and the frequency (%) for each particle size group is used as the scattering intensity distribution frequency (f%). Since the scattering intensity in dynamic light scattering depends on the particle size, if the integrated value of f (%) in a particle size range of from 1.0 to 1000.0 nm were 100%, this would mean that all of the particles contained in the sample are present with a particle size of from 1.0 to 1000.0 nm.

The integrated value of the scattering intensity distribution frequency (f%) in a particle size range of from 1.0 to 1000.0 nm can be set within the range described above by appropriately selecting the respective particle sizes of component A and component B, and the quantity ratio of component A and component B.

In addition, the quantity ratio of component A and component B in the vinylidene fluoride-based polymer used in the present invention is not particularly limited as long as the integrated value of the scattering intensity distribution frequency (f%) in a particle size range of from 1.0 to 1000.0 nm is in the range described above, but when the total amount of component A and component B is defined as 100 mass%, the polymer ordinarily contains from 35 to 85 mass% of component A and from 15 to 65 mass% of component B, preferably from 45 to 83 mass% of component A and from 17 to 55 mass% of component B, and more preferably from 50 to 80 mass% of component A and from 20 to 50 mass% of component B.

### Water

The water used to form the aqueous vinylidene fluoride-based polymer composition of the present invention is not particularly limited, but purified water such as ion-exchanged water or distilled water is ordinarily used. Tap water may also be used in some cases.

### Aqueous vinylidene fluoride-based polymer composition

The aqueous vinylidene fluoride-based polymer composition of the present invention comprises the vinylidene fluoride-based polymer described above and water.

In the aqueous vinylidene fluoride-based polymer composition of the present invention, the vinylidene fluoride-based polymer is ordinarily dispersed in water, and the vinylidene fluoride-based polymer is preferably dispersed in water uniformly. In addition, a portion of the vinylidene fluoride-based polymer may be dispersed in water, or a portion may be precipitated.

The aqueous vinylidene fluoride-based polymer composition of the present invention ordinarily contains from 5 to 60 mass% of the vinylidene fluoride-based polymer and from 40 to 95 mass% of water, preferably from 15 to 55 mass% of the vinylidene fluoride-based polymer and from 45 to 85 mass% of water, and more preferably from 20 to 50 mass% of the vinylidene fluoride-based polymer and from 50 to 80 mass% of water per 100 mass% of the aqueous vinylidene fluoride-based polymer composition.

The method for obtaining the aqueous vinylidene fluoride-based polymer composition of the present invention is not particularly limited, but examples include a method of adding and mixing component B into a latex containing the vinylidene fluoride-based polymer described above containing component A and water, a method of adding and mixing component B and water into a latex containing the vinylidene fluoride-based polymer described above, and a method of adding and mixing an aqueous dispersion of component B prepared in advance to a latex containing the vinylidene fluoride-based polymer described above.

The aqueous vinylidene fluoride-based polymer composition of the present invention may also contain components other than the vinylidene fluoride-based polymer and water. Examples of components other than the vinylidene fluoride-based polymer and water include dispersants such as surfactants and pH adjusters. Examples of pH adjusters include electrolytic substances having a buffer capacity such as Na₂HPO₄, NaH₂PO₄, and KH₂PO₄, and sodium hydroxide.

The aqueous vinylidene fluoride-based polymer composition of the present invention can be used in various applications in which vinylidene fluoride-based polymers are used, but the composition is ordinarily used in the preparation of a mixture for a non-aqueous electrolyte secondary battery used to produce the electrodes of a non-aqueous electrolyte secondary battery.

When a mixture for a non-aqueous electrolyte secondary battery prepared from the aqueous vinylidene fluoride-based polymer composition of the present invention is used, it is possible to obtain non-aqueous electrolyte secondary battery electrodes having excellent adhesive strength between a current collector and a mixture layer. In addition, using the electrodes improve the reliability of the non-aqueous electrolyte secondary battery.

### Binder solution

The binder solution of the present invention contains the aqueous vinylidene fluoride-based polymer composition described above and a thickener.

The thickener is not particularly limited as long as the thickener is a substance which imparts a thickening effect to the aqueous vinylidene fluoride-based polymer composition. Examples of thickeners include carboxymethyl cellulose (CMC), polyacrylic acid (PAA), polyvinyl pyrrolidone (PVP), polyvinyl alcohol (PVA), and polyethylene oxide (PEO), and carboxymethyl cellulose (CMC) and polyvinyl alcohol (PVA), are preferable from the perspective of the long-term chemical stability of the battery.

The method for obtaining the binder solution of the present invention is not particularly limited, but the binder solution can be obtained by adding and mixing a thickener into the aqueous vinylidene fluoride-based polymer composition described above.
For the purpose of adjusting the solid content concentration of the binder solution, water may also be added in addition to the aqueous vinylidene fluoride-based polymer composition and the thickener described above. The binder solution in the present invention refers to a fluid component excluding the active material other than the vinylidene fluoride-based polymer and solid materials such as a conductivity promoter from the mixture for a non-aqueous electrolyte secondary battery described above.

The binder solution of the present invention ordinarily contains from 0.1 to 10 mass% of the vinylidene fluoride-based polymer, from 80 to 99.8 mass% of water, and from 0.1 to 10 mass% of a thickener, preferably from 0.5 to 8 mass% of the vinylidene fluoride-based polymer, from 84 to 99 mass% of water, and from 0.5 to 8 mass% of a thickener, and more preferably from 0.8 to 5 mass% of the vinylidene fluoride-based polymer, from 90 to 98.4 mass% of water, and from 0.8 to 5 mass% of a thickener per 100 mass% of the binder solution.

The binder solution of the present invention may also contain components other than the vinylidene fluoride-based polymer and water constituting the aqueous vinylidene fluoride-based polymer composition and the thickener. Examples of components other than the vinylidene fluoride-based polymer, water, and the thickener include pH adjusters, antisettling agents, surfactants, and wetting agents.

### Mixture for non-aqueous electrolyte secondary battery

The mixture for a non-aqueous electrolyte secondary battery of the present invention contains the aqueous vinylidene fluoride-based polymer composition, a thickener, and an active material. Since the mixture for a non-aqueous electrolyte secondary battery of the present invention contains the aqueous vinylidene fluoride-based polymer composition described above, an electrode for the non-aqueous electrolyte secondary battery obtained by applying the mixture to a current collector and drying the mixture exhibits excellent adhesiveness between the current collector and the mixture layer.

The types and amounts of thickeners that the non-aqueous electrolyte secondary battery of the present invention may contain may be the same as those described in the "Binder solution" section above.
By varying the type or the like of the electrode active material, the mixture for a non-aqueous electrolyte secondary battery of the present invention may be used as a mixture for an anode, i.e., an anode mixture for a non-aqueous electrolyte secondary battery or as a mixture for a cathode, i.e., a cathode mixture for a non-aqueous electrolyte secondary battery.

The electrode active material contained in the non-aqueous electrolyte secondary battery of the present invention is not particularly limited, and a conventionally known electrode active material for an anode (also called an "anode active material" hereafter) or active material for a cathode (also called a "cathode active material" hereafter) may be used.

Examples of anode active materials include carbon materials, metal/alloy materials, and metal oxides. Of these, carbon materials are preferable. Artificial graphite, natural graphite, non-graphitizable carbon and graphitizable carbon may be used as carbon materials. Furthermore, one type carbon materials may be used alone, or two or more types may be used.

When such a carbon material is used, the energy density of the battery can be increased.
Artificial graphite is obtained, for example, by carbonizing an organic material, performing heat treatment at a high temperature, and pulverizing and classifying the resulting mixture. The MAG series (manufactured by Hitachi Chemical Co., Ltd.) or MCMB (manufactured by Osaka Gas Co., Ltd.) may be used as artificial graphite.

The non-graphitizable carbon can be obtained by firing a material derived from a petroleum pitch at 1000 to 1500°C. Carbotron P (manufactured by Kureha Corporation) may be used as a non-graphitizable carbon.

The specific surface area of the anode active material is preferably from 0.3 to 10 m²/g and more preferably from 0.6 to 6 m²/g. When the specific surface area exceeds 10 m²/g, the amount of decomposition of the electrolytic solution increases, and the initial irreversible capacity increases, which is not preferable.

A lithium-based cathode active material containing at least lithium is preferable as a cathode active material. Examples of lithium-based cathode active materials include composite metal chalcogen compounds represented by the general formula LiMY₂ (wherein M is at least one of a transition metal such as Co, Ni, Fe, Mn, Cr, or V, and Y is a chalcogen element such as O or S) such as LiCoO₂ or LiNiₓCo₁₋ₓO₂ (0 ≤ x ≤ 1), composite metal oxides assuming a spinel structure such as LiMn₂O₄, and olivine-type lithium compounds such as LiFePO₄. A commercially available product may also be used as the cathode active material.

The specific surface area of the cathode active material is preferably from 0.05 to 50 m²/g and more preferably from 0.1 to 30 m²/g.
The specific surface area of the electrode active materials can be determined by a nitrogen adsorption method.

As described above, the mixture for a non-aqueous electrolyte secondary battery of the present invention contains the aqueous vinylidene fluoride-based polymer composition, a thickener, and an active material. Water may be used as the dispersion medium contained in the mixture for a non-aqueous electrolyte secondary battery of the present invention. The mixture for a non-aqueous electrolyte secondary battery of the present invention may also contain other components as dispersion mediums or solvents. Other components acting as dispersion mediums or solvents are also called "non-aqueous solvents".

The dispersion solvent of the mixture for a non-aqueous electrolyte secondary battery contains water in an amount of not less than 50 mass%, preferably not less than 70 mass%, more preferably not less than 90 mass%, and particularly preferably not less than 95 mass% per total of 100 mass% of water and the non-aqueous solvent. It is also preferable to use only water as a dispersion medium, i.e., to use water in an amount of 100 mass%.

The non-aqueous solvent is not particularly limited, but examples include acetone, dimethyl sulfoxide, ethyl methyl ketone, diisopropyl ketone, cyclohexanone, methyl cyclohexane, ethyl acetate, γ-butyrolactone, tetrahydrofuran, acetamide, N-methyl pyrrolidone, N,N-dimethylformamide, propylene carbonate, dimethyl carbonate, ethyl methyl carbonate, and diethyl carbonate. One type of non-aqueous solvent may be used alone, or two or more types may be used.

As described above, the mixture for a non-aqueous electrolyte secondary battery of the present invention contains the aqueous vinylidene fluoride-based polymer composition, a thickener, and an active material. Since the aqueous vinylidene fluoride-based polymer composition contains the vinylidene fluoride-based polymer and water, the mixture for a non-aqueous electrolyte secondary battery of the present invention contains the vinylidene fluoride-based polymer, a thickener, an active material, and water.

The mixture for a non-aqueous electrolyte secondary battery of the present invention preferably contains the vinylidene fluoride-based polymer in an amount of from 0.2 to 15 parts by mass and more preferably from 0.5 to 10 parts by mass, and preferably contains the active material in an amount of from 85 to 99.8 parts by mass and more preferably from 90 to 99.5 parts by mass per total of 100 parts by mass of the vinylidene fluoride-based polymer and the electrode active material. When the total of the vinylidene fluoride-based polymer and the electrode active material is defined as 100 parts by mass, the amount of water is preferably from 20 to 300 parts by mass and more preferably from 50 to 200 parts by mass. When the total of the vinylidene fluoride-based polymer and the electrode active material is defined as 100 parts by mass, the amount of the thickener is preferably from 0.1 to 10 parts by mass and more preferably from 0.1 to 5 parts by mass.

When each component is contained in the range described above, the adhesive strength between the mixture layer and the current collector is excellent when electrodes for a non-aqueous electrolyte secondary battery are formed using the mixture for a non-aqueous electrolyte secondary battery of the present invention, which is preferable.

The mixture for a non-aqueous electrolyte secondary battery of the present invention may also contain components other than the vinylidene fluoride-based polymer, thickener, and active material. Examples of other components include conductivity promoters such as carbon black, pigment dispersants such as polyvinyl pyrrolidone, and adhesive adjuvants such as polyacrylic acids and polymethacrylic acids. The other components may include polymers other than the vinylidene fluoride-based polymer. Examples of other polymers include polytetrafluoroethylene (PTFE), styrene/butadiene rubber (SBR), and polyacrylonitrile (PAN). When another polymer is contained in the mixture for a non-aqueous electrolyte secondary battery of the present invention, the other polymer is ordinarily contained in an amount of not greater than 25 parts by mass per 100 parts by mass of the vinylidene fluoride-based polymer.

The method for obtaining the mixture for a non-aqueous electrolyte secondary battery of the present invention is not particularly limited, but the mixture may be obtained by adding and mixing a thickener and an active material into the aqueous vinylidene fluoride-based polymer composition described above, or the mixture may be obtained by adding and mixing an active material into the binder solution described above.

### Electrode for a non-aqueous electrolyte secondary battery

An electrode for a non-aqueous electrolyte secondary battery of the present invention is obtained by applying the mixture for a non-aqueous electrolyte secondary battery to a current collector and drying the mixture. An electrode for a non-aqueous electrolyte secondary battery of the present invention has a current collector and a layer formed from a mixture for a non-aqueous electrolyte secondary battery. When an anode mixture for a non-aqueous electrolyte secondary battery is used as the mixture for a non-aqueous electrolyte secondary battery, an anode for a non-aqueous electrolyte secondary battery is obtained, and when a cathode mixture for a non-aqueous electrolyte secondary battery is used as the mixture for a non-aqueous electrolyte secondary battery, a cathode for a non-aqueous electrolyte secondary battery is obtained.

In the present invention, a layer formed by applying a mixture for a non-aqueous electrolyte secondary battery to a current collector and drying the mixture and formed from a mixture for a non-aqueous electrolyte secondary battery is called a "mixture layer".
An example of the current collector used in the present invention in order to obtain an anode for non-aqueous electrolyte secondary battery is copper, and examples of the form thereof include a metal foil or a metal mesh. In order to obtain an anode for a non-aqueous electrolyte secondary battery, it is preferable to use a copper foil.

An example of the current collector used in the present invention in order to obtain a cathode for non-aqueous electrolyte secondary battery is aluminum, and examples of the form thereof include a metal foil or a metal mesh. In order to obtain a cathode for a non-aqueous electrolyte secondary battery, it is preferable to use an aluminum foil.

The thickness of the current collector is ordinarily from 5 to 100 µm and preferably from 5 to 20 µm.
The thickness of the mixture layer is, in the case of a cathode, ordinarily from 40 to 500 µm and preferably from 100 to 400 µm. In the case of an anode, the thickness is ordinarily from 20 to 400 µm and preferably from 40 to 300 µm. The basis weight of the mixture layer is ordinarily from 20 to 700 g/m² and preferably from 30 to 500 g/m².

When producing an electrode for a non-aqueous electrolyte secondary battery of the present invention, it is preferably to apply the mixture for a non-aqueous electrolyte secondary battery to at least one surface and preferably both surfaces of the current collector. The coating method is not particularly limited, but examples include methods of coating with a bar coater, a die coater, or a comma coater.

The drying which follows coating is ordinarily performed for 1 to 300 minutes at a temperature of from 50 to 150°C. The pressure at the time of drying is not particularly limited, but drying is ordinarily performed at atmospheric pressure or reduced pressure.

Heat treatment may be further performed after drying. When heat treatment is performed, heat treatment is ordinarily performed for 10 seconds to 300 minutes at a temperature of from 100 to 300°C. The temperature of heat treatment overlaps with that of drying, but these processes may be separate processes or processes performed consecutively.

Press treatment may also be performed. When press treatment is performed, press treatment is ordinarily performed at 1 to 200 MP-G. Performing press treatment is preferable since the electrode density can be improved.
The electrodes for a non-aqueous electrolyte secondary battery of the present invention can be produced with the method described above. The layer structure of an electrode for a non-aqueous electrolyte secondary battery is a two-layer structure comprising a mixture layer/current collector when the mixture for a non-aqueous electrolyte secondary battery is applied to one surface of the current collector, and is a three-layer structure comprising a mixture layer/current collector/mixture layer when the mixture for a non-aqueous electrolyte secondary battery is applied to both surfaces of the current collector.

Since using the mixture for a non-aqueous electrolyte secondary battery in the electrodes for a non-aqueous electrolyte secondary battery of the present invention yields excellent adhesive strength between the current collector and the mixture layer, cracking or peeling is unlikely to occur in the electrodes in processes such as pressing, slitting, or winding, which is preferable in that it leads to an improvement in productivity.

### Non-aqueous electrolyte secondary battery

The non-aqueous electrolyte secondary battery of the present invention has the aforementioned electrodes for a non-aqueous electrolyte secondary battery.

The non-aqueous electrolyte secondary battery of the present invention is not particularly limited with the exception of having the aforementioned electrodes for a non-aqueous electrolyte secondary battery. The non-aqueous electrolyte secondary battery has the electrodes for a non-aqueous electrolyte secondary battery described above, specifically, a cathode for a non-aqueous electrolyte secondary battery and/or an anode for a non-aqueous electrolyte secondary battery, and conventional materials may be used for members other than the electrodes for a non-aqueous electrolyte secondary battery such as a separator, for example.

### Examples

Working examples of the present invention are described in greater detail below, but the present invention is not limited thereby.

### Production of vinylidene fluoride-hexafluoropropylene copolymer

First, 0.2 parts by mass of dibasic sodium phosphate (Na₂HPO₄) and 330 parts by mass of ion-exchanged water were placed in an autoclave, and after degassing, 1 part by mass of an ammonium salt of perfluorooctanoic acid (PFOA), 0.25 parts by mass of ethyl acetate, 22.7 parts by mass of vinylidene fluoride (VDF), and 14.0 parts by mass of hexafluoropropylene (HFP) were added.

After the mixture was heated to 80°C while stirring, 0.06 parts by mass of ammonium persulfate (APS) was added, and polymerization started. The initial pressure at this time was 3.2 MPa.
Beginning at the point when the pressure dropped to 2.5 MPa, 63.3 parts by mass of VDF was added continuously so that this pressure was maintained.

When the pressure dropped to 1.5 MPa, the polymerization reaction ended, and a VDF-HFP copolymer latex was obtained.
The resin concentration of the obtained VDF-HFP copolymer latex was 18.8 mass%, and the average particle size D50 of the VDF-HFP copolymer was 140.9 nm.

### Production of vinylidene fluoride-hexafluoropropylene copolymer granulated particles

Vinylidene fluoride-hexafluoropropylene copolymer granulated particles were produced using part of the VDF-HFP copolymer latex described above.

Salt extraction was then performed using 0.5 mass% of a calcium chloride (CaCl₂) aqueous solution in an amount equivalent to that of the VDF-HFP copolymer latex. The CaCl₂ aqueous solution was stirred, and the latex was dropped into the solution. After the entire amount was completely added, dehydration was performed lightly by means of filtration under reduced pressure, and the mixture was washed with ion-exchanged water in an amount twice that of the latex. After washing, dehydration was performed once again by filtration under reduced pressure, and the mixture was dried for 5 hours at 80°C to obtain VDF-HFP copolymer granulated particles. The average particle size D50 of the VDF-HFP copolymer was 78499.7 nm.

### Working Example 1

An aqueous VDF-HFP copolymer composition (1) was prepared by mixing the VDF-HFP copolymer latex and the VDF-HFP copolymer granulated particles so that the ratio of the polymer in the VDF-HFP copolymer latex (component A) to the VDF-HFP copolymer granulated particles (component B) was 80:20 in terms of the mass ratio.

### Working Example 2

An aqueous VDF-HFP copolymer composition (2) was prepared by mixing the VDF-HFP copolymer latex and the VDF-HFP copolymer granulated particles so that the ratio of the polymer in the VDF-HFP copolymer latex (component A) to the VDF-HFP copolymer granulated particles (component B) was 50:50 in terms of the mass ratio.

### Comparative Example 1

An aqueous VDF-HFP copolymer composition (c1) was prepared by adding ion-exchanged water to the VDF-HFP copolymer granulated particles (component B) described above.

### Comparative Example 2

An aqueous VDF-HFP copolymer composition (c2) was prepared by mixing the VDF-HFP copolymer latex and the VDF-HFP copolymer granulated particles so that the ratio of the polymer in the VDF-HFP copolymer latex (component A) to the VDF-HFP copolymer granulated particles (component B) was 20:80 in terms of the mass ratio.

### Comparative Example 3

The VDF-HFP copolymer latex described above was used as an aqueous VDF-HFP copolymer composition (c3).

### Comparative Example 4

An aqueous VDF-HFP copolymer composition (c4) was prepared by mixing the VDF-HFP copolymer latex and the VDF-HFP copolymer granulated particles so that the ratio of the polymer in the VDF-HFP copolymer latex (component A) to the VDF-HFP copolymer granulated particles (component B) was 90:10 in terms of the mass ratio. The aqueous VDF-HFP copolymer compositions obtained in the working examples and comparative examples described above were evaluated with the following methods.

### Measurement of scattering intensity distribution by dynamic light scattering

The scattering intensity distribution of the aqueous VDF-HFP copolymer composition was measured using an ELSZ-2 (zeta potential/particle size measurement system ELS-Z version 3.600/2.30, manufactured by Otsuka Electronics Co., Ltd.) based on JIS Z8826 in a measurement range of from 1.0 to 999,999.9 nm with a dispersion medium of ion-exchanged water at a measurement temperature of 25°C and a noise cut level of 1.0%.

The integrated value of the scattering intensity distribution frequency f (%) was calculated by integrating the values in a particle size range of from 1.0 nm to 1000.0 nm at the f (%) obtained in the measurement above.
The D50 of component A was calculated using the scattering intensity distribution frequency f (%) of components not less than 1 nm and not greater than 1000 nm.

The D50 of component B was calculated using the scattering intensity distribution frequency f (%) of components exceeding 1000 nm and not greater than 999999.9 nm.
Here, the D50 refers to the particle size when the scattering intensity for particles larger than a certain particle size constitute 50% of the total scattering intensity in the scattering intensity distribution of the aqueous VDF-HFP copolymer composition.

As illustrated in Table 1 below, the D50 values of component A and component B differ in each of the working examples and comparative examples, but this is considered to be an effect of changes in the aggregation/dispersion state due to the mixing of component A and component B.

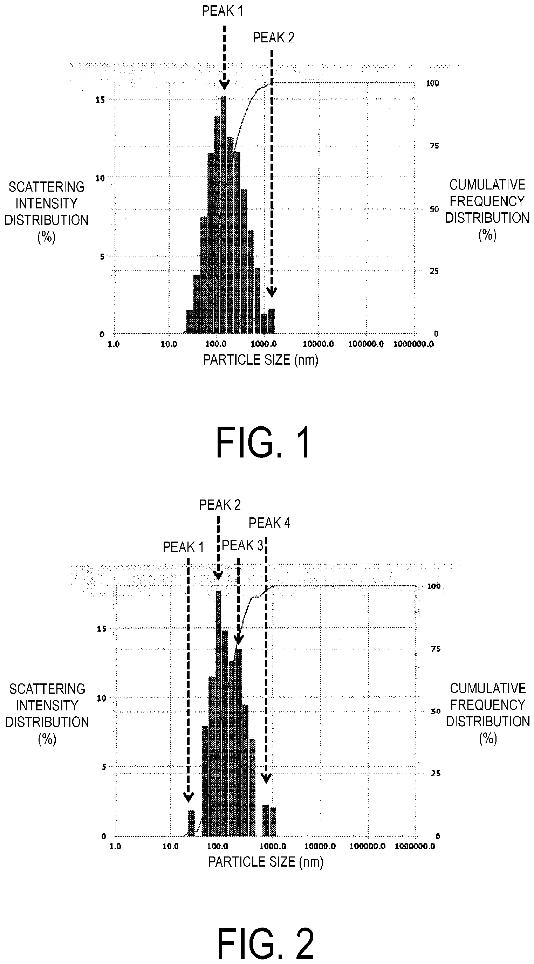

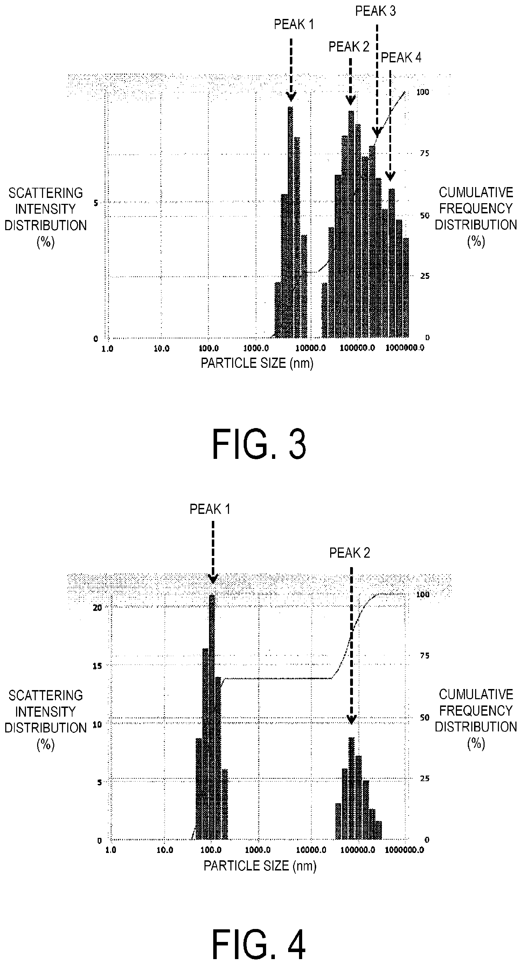

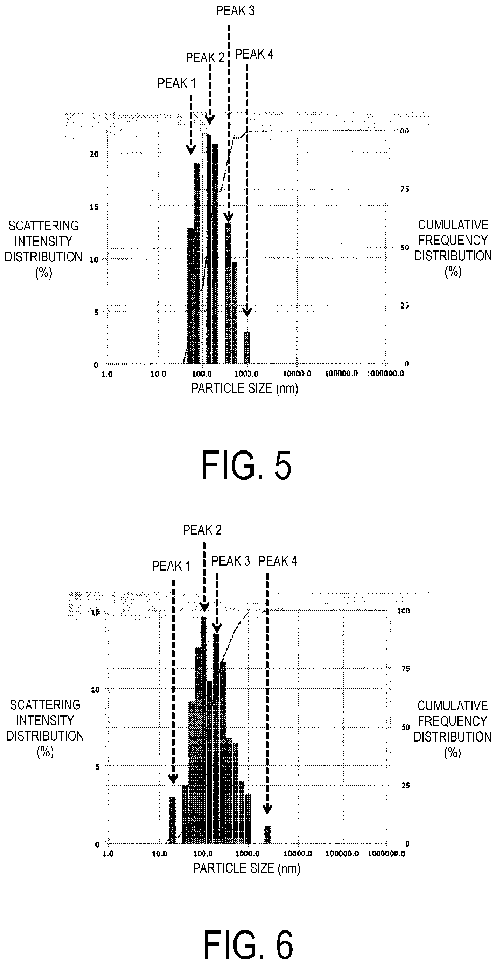

The aqueous VDF-HFP copolymer compositions obtained in the working examples and the comparative examples were all multi-modal (two or more peaks were observed) from the measurement results of the scattering intensity distribution.
The scattering intensity distributions of the aqueous VDF-HFP copolymer compositions obtained in each of the working examples and the comparative examples are illustrated in FIGS. 1 to 6.

### Preparation of CMC aqueous solution

A CMC aqueous solution was obtained by dissolving carboxymethyl cellulose (CMC) (Cellogen 4H, manufactured by Daiichi Kogyo Seiyaku Co., Ltd.) while heating and then adding water so that the resin concentration was 1.5 mass%.

Part of the CMC aqueous solution was dried for 2 hours at 150°C, and when the CMC concentration of the CMC aqueous solution was determined from the weight of the CMC after drying and the mass of the CMC aqueous solution, the CMC concentration was 1.5 mass%.

### Peeling test

A slurry (mixture for a non-aqueous electrolyte secondary battery) was prepared from an active material (manufactured by BTR, graphite active material, BTR918), an aqueous VDF-HFP copolymer composition, a 1.5 mass% aqueous solution of CMC (Cellogen 4H, manufactured by Daiichi Kogyo Seiyaku Co., Ltd.), and water using Rentaro (Thinky Corporation).

Water was then added to form a solid content of 55 mass% using each component in an amount so that the active material:VDF-HFP copolymer:thickener = 100:1:1 in terms of the mass ratio.
The prepared slurry was applied to copper foil (thickness: 0.009 mm, manufactured by UACJ Foil Corporation) in an amount so that the basis weight of the mixture layer of the electrode after drying was 200 g/m², and the slurry was dried for 30 minutes under conditions in a nitrogen atmosphere of 80°C using a high-temperature constant temperature device (HISPEC HT310S, manufactured by Kusumoto Chemicals, Ltd.).

Furthermore, drying was performed for 2 hours at 150°C to obtain a dry electrode. The dry electrode was pressed at 1.2 MPa to obtain a compacted electrode. The peel strength was evaluated when the copper foil was peeled off in a direction 180° with respect to the electrode surface using a tensilon (STA-1150 manufactured by Orientec Co., Ltd.).

Measurements were taken five times in each of the working examples and the comparative examples, and the average was used as the peel strength. The peel strength was not measured in Comparative Examples 1 and 2 since the current collector and the mixture layer peeled at the stage when pressing was performed at the time of electrode production.
The evaluation results for each of the working examples and comparative examples are shown in Table 1.

### [Table 1]

**Table 1**

| | Component A/component B (Mass ratio) | Electrode state after pressing | Peel strength (gf/mm) | f% (Integrated value in a particle size range of from 1.0 to 1000.0 nm) | Component A D50(nm) | Component B D50(nm) |
|---|---|---|---|---|---|---|
| Working Example 1 | 80/20 | Good | 0.39 | 98.5 | 141.4 | 1184.5 |
| Working Example 2 | 50/50 | Good | 0.79 | 98.0 | 139.7 | 1184.5 |
| Comparative Example 1 | 0/100 | Peeling | Measurement not possible | 0 | No components | 78499.7 |
| Comparative Example 2 | 20/80 | Peeling | Measurement not possible | 65.9 | 92.4 | 79266.1 |
| Comparative Example 3 | 100/0 | Good | 0.29 | 100 | 140.9 | No components |
| Comparative Example 4 | 90/10 | Good | 0.28 | 98.9 | 138.2 | 2422.7 |

## Claims

1. An aqueous vinylidene fluoride-based polymer composition comprising:
a vinylidene fluoride-based polymer and water;
the vinylidene fluoride-based polymer exhibiting a multi-modal scattering intensity distribution in dynamic light scattering in a measurement range of from 1.0 to 999,999.9 nm;
the vinylidene fluoride-based polymer comprising a component having a particle size of not greater than 1 µm in a scattering intensity distribution (component A) and a component having a particle size exceeding 1 µm (component B);
an average particle size (D50) of component A being from 0.02 to 0.5 µm;
an average particle size (D50) of component B being from 1.1 to 50 µm; and
an integrated value of the scattering intensity distribution frequency (f%) in a particle size range of from 1.0 to 1000.0 nm as determined by dynamic light scattering in a measurement range of from 1.0 to 999,999.9 nm being in a range of from 70.0 to 98.7%.

2. The aqueous vinylidene fluoride-based polymer composition according to claim 1, wherein the integrated value of the scattering intensity distribution frequency (f%) in a particle size range from 1.0 to 1000.0 nm is in a range of from 80.0 to 98.6%.

3. A binder solution comprising the aqueous vinylidene fluoride-based polymer composition described in claim 1 or 2 and a thickener.

4. A mixture for a non-aqueous electrolyte secondary battery comprising the aqueous vinylidene fluoride-based polymer composition described in claim 1 or 2, a thickener, and an active material.

5. An electrode for a non-aqueous electrolyte secondary battery which is obtained by applying the mixture for a non-aqueous electrolyte secondary battery described in claim 4 to a current collector and drying the mixture.

6. A non-aqueous electrolyte secondary battery comprising the electrode for a non-aqueous electrolyte secondary battery described in claim 5.

## Patentansprüche

1. Wässrige Polymerzusammensetzung auf der Basis von Vinylidenfluorid, umfassend:
ein Polymer auf der Basis von Vinylidenfluorid und Wasser;
wobei das Polymer auf der Basis von Vinylidenfluorid eine multimodale Streuungsintensitätsverteilung dynamischer Lichtstreuung in einem Messbereich von 1,0 bis 999999,9 nm aufweist;
wobei das Polymer auf der Basis von Vinylidenfluorid eine Komponente, die eine Teilchengröße von nicht mehr als 1 µm in einer Streuungsintensitätsverteilung (Komponente A) aufweist, und eine Komponente, die eine Teilchengröße von mehr als 1 µm (Komponente B) aufweist, umfasst;
wobei eine durchschnittliche Teilchengröße (D50) der Komponente A 0,02 bis 0,5 µm beträgt;
wobei eine durchschnittliche Teilchengröße (D50) der Komponente B 1,1 bis 50 µm beträgt; und
wobei ein integrierter Wert der Streuungsintensitätsverteilungfrequenz (f%) in einem Teilchengrößenbereich von 1,0 bis 1000,0 nm, wie durch dynamische Lichtstreuung in einem Messbereich von 1,0 bis 999999,9 nm bestimmt, in einem Bereich von 70,0 bis 98,7 % liegt.

2. Wässrige Polymerzusammensetzung auf der Basis von Vinylidenfluorid nach Anspruch 1, wobei der integrierte Wert der Streuungsintensitätsverteilungfrequenz (f%) in einem Teilchengrößenbereich von 1,0 bis 1000,0 nm in einem Bereich von 80,0 bis 98,6 % liegt.

3. Bindemittellösung umfassend die wässrige Polymerzusammensetzung auf der Basis von Vinylidenfluorid, die in Anspruch 1 oder 2 beschrieben ist, und ein Verdickungsmittel.

4. Mischung für eine Sekundärbatterie mit nichtwässrigem Elektrolyt, umfassend die wässrige Polymerzusammensetzung auf der Basis von Vinylidenfluorid, die in Anspruch 1 oder 2 beschrieben ist, ein Verdickungsmittel und ein aktives Material.

5. Elektrode für eine Sekundärbatterie mit nichtwässrigem Elektrolyt, die durch Anwenden der Mischung für eine Sekundärbatterie mit nichtwässrigem Elektrolyt, die in Anspruch 4 beschrieben ist, auf einen Stromkollektor und Trocknen der Mischung erhalten wird.

6. Sekundärbatterie mit nichtwässrigem Elektrolyt, umfassend die Elektrode für eine Sekundärbatterie mit nicht wässrigem Elektrolyt, die in Anspruch 5 beschrieben ist.

## Revendications

1. Composition aqueuse de polymère à base de fluorure de vinylidène comprenant:
un polymère à base de fluorure de vinylidène et de l'eau;
le polymère à base de fluorure de vinylidène faisant preuve d'une distribution d'intensité de diffusion multimodale en diffusion de lumière dynamique située dans une plage de mesures de 1,0 à 999999,9 nm;
le polymère à base de fluorure de vinylidène comprenant un composant ayant une taille de particule non supérieure à 1 (_im dans une distribution d'intensité de diffusion (composant A) et un composant ayant une taille de particule excédant 1 µm (composant B);
une taille moyenne de particule (D50) du composant A étant de 0,02 à 0,5 µm;
une taille moyenne de particule (D50) du composant B étant de 1,1 à 50 µm; et
une valeur intégrée de la fréquence de distribution d'intensité de diffusion (%f) dans une plage de tailles de particule de 1,0 à 1000,0 nm telle que déterminée par diffusion de lumière dynamique dans une plage de mesures située entre 1,0 à 999999,9 nm se situant dans une plage de 70,0 à 98,7 %.

2. Composition aqueuse de polymère à base de fluorure de vinylidène selon la revendication 1, dans laquelle la valeur intégrée de la fréquence de distribution d'intensité de diffusion (%f) dans une plage de tailles de particule de 1,0 à 1000,0 nm se situe dans une plage de 80,0 à 98,6%.

3. Solution liante comprenant la composition aqueuse de polymère à base de fluorure de vinylidène décrite selon la revendication 1 ou 2 et un épaississant.

4. Mélange destiné à une batterie secondaire à électrolyte non aqueux comprenant la composition aqueuse de polymère à base de fluorure de vinylidène décrite selon la revendication 1 ou 2, un épaississant, et un matériau actif.

5. Électrode destinée à une batterie secondaire à électrolyte non aqueux qui est obtenue en appliquant le mélange destiné à une batterie secondaire à électrolyte non aqueux décrit selon la revendication 4 à un collecteur de courant et le séchage du mélange.

6. Batterie secondaire à électrolyte non aqueux comprenant l'électrode destinée à une batterie secondaire à électrolyte non aqueux décrite selon la revendication 5.
